# EUROPEAN PATENT SPECIFICATION

(11) **EP 3 299 075 B1**
(45) Date of publication and mention of the grant of the patent: **10.05.2023**
(21) Application number: 15892143.7
(22) Date of filing: 18.05.2015
(51) Int. Cl.: C11D 1/14, C11D 3/28, C11D 11/00

(54) **CLEANING LIQUID FOR SHIP BALLAST WATER TREATMENT FILTER**
REINIGUNGSFLÜSSIGKEIT FÜR FILTER ZUR BEHANDLUNG VON SCHIFFSBALLASTWASSER
LIQUIDE DE NETTOYAGE DESTINÉ À UN FILTRE DE TRAITEMENT D'EAU DE BALLAST DE NAVIRE

(43) Date of publication of application: 28.03.2018
(60) Divisional application: 19171813.9
(73) Proprietor: Sunrui Marine Environment Engineering Co., Ltd., Qingdao, Shandong 266101 (CN)
(72) Inventor: DUAN, Dongxia, Qingdao Shandong 266101 (CN); LIU, Guangzhou, Qingdao Shandong 266101 (CN)
(74) Representative: Haseltine Lake Kempner LLP
(86) International application number: PCT/CN2015/079171
(87) International publication number: WO 2016/183764

(56) References cited:
- CN-A- 1 696 067
- CN-A- 101 481 182
- CN-A- 103 463 990
- CN-A- 104 818 164
- CN-U- 204 798 968
- CN-Y- 2 813 594
- RU-U1- 150 765
- US-A- 5 776 876
- US-A1- 2006 273 038
- US-A1- 2010 108 601

## Description

### TECHNICAL FIELD

The present invention relates to ballast water treatment technology for ship, and more particularly to cleaning liquid for ship ballast water treatment filter.

### BACKGROUND

During the voyage of a ship, ballasting water is necessary. When ballasting, local aquatic organisms are brought into the ballast tank and then discharged to the destination waterway with the ballast water. The ballast water, carried by the ship from one place to another, causes the spread of harmful aquatic organisms and pathogens. In order to effectively control and prevent the spread of harmful aquatic organisms and pathogens, which were caused by the ballast water of ships, International Marine Organization (IMO) passed the "International Convention for the Control and Management of Ships' Ballast Water and Sediments" in 2004. "The Convention" requires all ships to be equipped with ballast water treatment system on schedule and is applicable retroactively to all present ships.

Ship ballast water treatment equipment is a kind of ship supporting equipment which is required by the international maritime organization. It is mainly used to kill ballast water. Filtration technology is a common treatment technology used in ship ballast water management system. It is mainly used to filter biological or suspended particles which are larger than 50um in ballast water, so as to facilitate subsequent treatment.

The existing filter for ship ballast water treatment is mostly made of stainless steel wire, and the case of the filter is made of carbon steel coated with epoxy anticorrosive coating. The meshes of the filter are fine and the diameter of the meshes is only tens of microns. It is easy to block the meshes during use. After a period of time, the filtration capacity of the filter decreases, the backwash frequency increases, and the backwash effect decreases. After disassembling the equipment, it is found that the filter mesh is blocked by sand, dirt and so on, and the surface of the filter is corroded in different degrees. In order to ensure the filtration capacity of the filter, the filter must be cleaned and regenerated. At present, our country lacks the cleaning technology for ship ballast water treatment filter.

US5776876 discloses a filter cleaning composition for use in cleaning swimming pool filters, which consists essentially of: (a) from 5% to 60% by weight of one or more acids selected from the group consisting of hydrochloric, hydrofluoric, hydrobromic, sulfuric, sulfamic, sulfonic, phosphoric and nitric acids; (b) from 1% to 40% of an alkyl iminodipropionic acid amphoteric surfactant; (c) from 0.5% to 20% of a sequesterant/builder selected from the group consisting of glucono delta lactone (GDL), citric acid, phosphonobutane tricarboxylic acid (PBTC), and hydroxyethylidenediphosphonic acid (HEDP); and(d) water.

US 20100108601 discloses a method for treating ballast water with a membrane. The method is provided with, in or on a hull of a ship, the membrane treatment equipment that separates a microorganism with a size equal to or greater than a predetermined size, wherein a fouling substance attached to a surface of the membrane is dissolved, broken down, or removed by using a cleaning fluid containing a peroxide. The peroxide is at least one selected from hydrogen peroxide, hypochlorous acid, and ozone water.

### SUMMARY

Accordingly, the present invention provides a cleaning liquid for ship ballast water treatment filter. An online cleaning device and online cleaning method for ship ballast water treatment filter are also disclosed.

The cleaning liquid for ship ballast water treatment filter provided by the present invention, comprises hydrochloric acid with a molar concentration of 3.2-6.4mol/L, hexamethylene tetramine with a mass-to-volume ratio of 1.3-4.0g/L, polyacrylic acid with a mass-to-volume ratio of 13.0-33.5g/L, polyaspartic acid with a mass-to-volume ratio of 3.0-13.5g/L, sodium dodecyl sulfate with a mass-to-volume ratio of 0.6-2.0g/L, and sodium gluconate with a mass-to-volume ratio of 3.0-10.0g/L.

The online cleaning device for ship ballast water treatment filter comprises a filter cleaning pipeline and a cleaning liquid preparation tank disposed on the filter cleaning pipeline. The cleaning liquid preparation tank comprises a cleaning liquid outlet and a cleaning liquid reinjection opening. The filter cleaning pipeline comprises a cleaning liquid injection pipeline arranged between the cleaning liquid outlet of the cleaning liquid preparation tank and a water inlet of the filter, and a cleaning liquid reinjection pipeline arranged between a water outlet of the filter and cleaning liquid reinjection opening of the cleaning liquid preparation tank. The cleaning liquid prepared in the cleaning liquid preparation tank is injected into the filter via the cleaning liquid injection pipeline and re-injected into the cleaning liquid preparation tank via the cleaning liquid reinjection pipeline.

The online cleaning method for ship ballast water treatment filter includes the following steps: adding a filter cleaning pipeline and a cleaning liquid preparation tank in the ballast water main pipeline of the ship ballast water treatment system, the filter cleaning pipeline comprising a cleaning liquid injection pipeline and a cleaning liquid reinjection pipeline, the cleaning liquid injection pipeline being located between the cleaning liquid outlet of the cleaning liquid preparation tank and a water inlet of the filter, and the cleaning liquid reinjection pipeline being located between a water outlet of the filter and a cleaning liquid reinjection opening of the cleaning liquid preparation tank; injecting cleaning liquid prepared in the cleaning liquid preparation tank into the filter through the cleaning liquid injection pipeline; soaking for a predetermined period of time; re-injecting the cleaning liquid back to the cleaning liquid preparation tank through the cleaning liquid reinjection pipeline.

Techniques provided in embodiments of the present disclosure have the following advantages:
The present disclosure adds the filter cleaning pipeline and the cleaning liquid preparation tank in existing ballast water main pipeline. Through the filter cleaning pipeline, the cleaning liquid prepared in the cleaning liquid preparation tank is injected into the filter and re-injected back to the cleaning liquid preparation tank after soaking for a predetermined period of time, so as to realize online cleaning filter without disassembling the filter. The cleaning method has a high cleaning efficiency and the dirt on the filter can be completely removed. The filter capacity of the filter after regeneration is recovered well.

The aforementioned description is a conceptual overview of the present invention. In order to make the technique of the present invention be clearly understood and enable in accordance with specification, and the above or other aspects, features and advantages of the present invention become apparent, embodiments and detailed descriptions in conjunction with the accompanying drawings are provided hereafter.

### BRIEF DESCRIPTION OF THE DRAWINGS

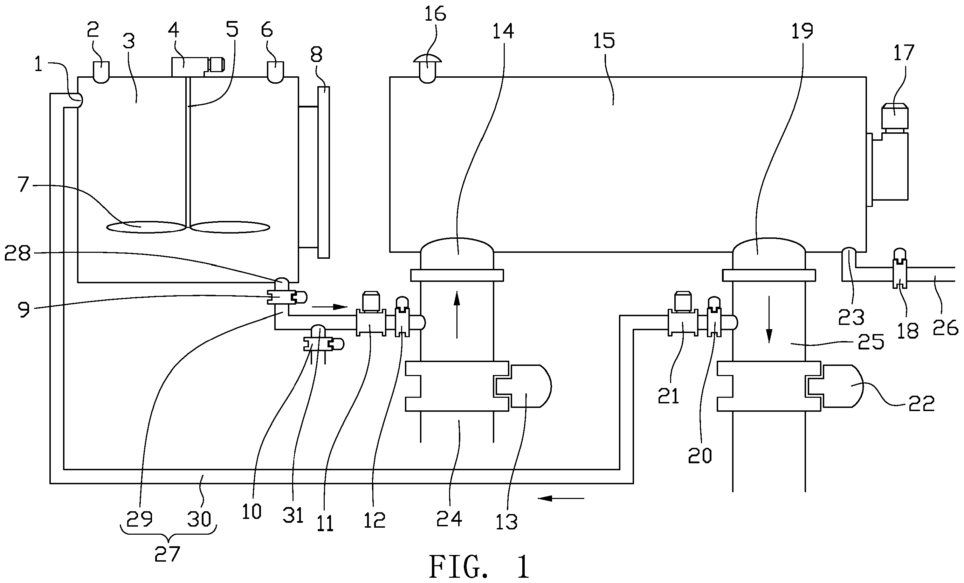

FIG. 1 schematically shows an online cleaning device for a ship ballast water treatment filter.

### DETAILED DESCRIPTION OF PREFERRED EMBODIMENTS

In order to further illustrate the techniques and effect adopted for achieving the aspects, exemplary embodiments, structure, features and the effects of the cleaning liquid and online cleaning device and method for ship ballast water treatment filters will be described thoroughly in conjunction with the accompanying drawings and the preferred embodiments.

The foregoing or other techniques, features and effects of the present invention will become apparent in the following detailed descriptions of the preferred embodiments in conjunction with the accompanying drawings. In view of descriptions of exemplary embodiments, the techniques and effects of the present invention adopted for achieving aspects will be further and specifically understood. The accompanying drawings are merely used for illustration and description, but not used to limit the present invention.

It is noted that the part of the description corresponding to the online cleaning device for ship ballast water treatment filter and its related FIG. 1 are not disclosed as part of the invention.

An online cleaning device for ship ballast water treatment filter is mainly used for online cleaning filters used in ship ballast water treatment devices. As shown in Figure 1, a filter 15 is located in the ballast water main pipeline of the ship ballast water treatment device. The top of the filter 15 has a gas water separating valve 16, the bottom has a filter water inlet 14, a filter water outlet 19 and a filter sewage outfall 23. The filter water inlet 14 is connected with a filter water inlet pipe 24, the filter water outlet 19 is connected with a filter water outlet pipe 25, and the filter sewage outfall 23 is connected with a filter sewage outfall pipe 26. The filter water inlet pipe 24 and the filter water outlet pipe 25 are parts of ballast water main pipeline. The filter water inlet pipe 24, the filter outlet pipe 25 and the filter sewage outfall pipe 26 are respectively provided with a filter inlet valve 13, a filter outlet valve 22 and a filter drain valve 18 at positions close to the filter 15. The filter 15 is provided with an electric motor 17 at a position near the filter drain valve 18 for backwashing of the filter 15.

The online cleaning device of the filter comprises a filter cleaning pipeline 27 and a cleaning liquid preparation tank 3 arranged in the filter cleaning pipeline 27.

Wherein, the cleaning liquid preparation tank 3 is used for preparing filter cleaning liquid. The top of the cleaning liquid preparation tank 3 is provided with a fresh water inlet 2 and a drug adding opening 6, the bottom of the cleaning liquid preparation tank 3 is provided with a cleaning liquid outlet 28, and the upper side corner is provided with a cleaning liquid reinjection opening 1. Moreover, one side of the cleaning liquid preparation tank 3 is provided with a liquid level gauge 8 configured for monitoring and controlling the liquid level in the cleaning liquid preparation tank 3. In addition, the top of the cleaning liquid preparation tank 3 is further equipped with a stirring electric motor 4, and a stirring shaft 5 and stirring blades 7 connecting with the stirring electric motor 4, the stirring shaft 5 and the stirring blades 7 extending into the cleaning liquid preparation tank 3 in order to stir the liquid in the tank 3 in the process of preparation of the cleaning liquid so that the added drugs can be mixed evenly quickly.

The cleaning liquid prepared in the cleaning liquid preparation tank 3 comprises hydrochloric acid, hexamethylene tetramine, polyacrylic acid, polyaspartic acid, sodium dodecyl sulfate and sodium gluconate. The cleaning liquid can react with dirt on the mesh of the filter without damaging the mesh. In preparing the cleaning liquid, the added drugs are solid except that hydrochloric acid is liquid. In preparing the cleaning liquid, the added drugs dissolve into a certain amount of fresh water which is then stirred evenly, and the required cleaning liquid can be obtained. Specifically, in the cleaning liquid of this embodiment, the molar concentration of hydrochloric acid is 3.2-6.4mol/L, the mass-to-volume ratio of the hexamethylene tetramine is 1.3-4.0g/L, the mass-to-volume ratio of polyacrylic acid is 13.0-33.5g/L, the mass-to-volume ratio of the polyaspartic acid is 3.0-13.5g/L, the mass-to-volume ratio of sodium dodecyl sulfate is 0.6-2.0g/L, and the mass-to-volume ratio of sodium gluconate is 3.0-10.0g/L.

The filter cleaning pipeline 27 comprises a cleaning liquid injection pipeline 29 arranged between the cleaning liquid outlet 28 of the cleaning liquid preparation tank 3 and the filter water inlet 14, and a cleaning liquid reinjection pipeline 30 arranged between the filter water outlet 19 and the cleaning liquid reinjection opening 1 of the cleaning liquid preparation tank 3. Two ends of the cleaning liquid injection pipeline 29 are respectively connected with the cleaning liquid outlet 28 of the cleaning liquid preparation tank 3 and the filter water inlet pipe 24, and the connection between the cleaning liquid injection pipe 29 and the filter water inlet pipe 24 is located at downstream of the filter water inlet valve 13. Two ends of the cleaning liquid reinjection pipeline 30 are respectively connected with the filter water outlet pipe 25 and the cleaning liquid rejection opening 1 of the cleaning liquid preparation tank 3, and the connection between the cleaning liquid reinjection pipeline 30 and the filter water outlet pipe 25 is located at the upstream of the water outlet valve 22. It should be noted that the upstream and downstream are relative to the direction of water flow in the filter water inlet pipe 24 and the filter water outlet pipe 25. The cleaning liquid prepared in the cleaning liquid preparation tank 3 can be injected into the filter 15 through the cleaning liquid injection pipeline 29, and can be re-injected back into the cleaning liquid preparation tank 3 by the cleaning liquid reinjection pipeline 30.

In addition, the cleaning liquid injection pipeline 29 is provided with a valve 12 at a location near the filter water inlet pipe 24, and a valve 9 at a location close to the cleaning liquid preparation tank 3. A water pump 11 is arranged between the valve 9 and the valve 12, a backwash water injection pipe 31 is arranged between the valve 9 and the water pump 11, and the backwash water injection pipe 31 is provided with a backwash water injection valve 10. A valve 20 and a water pump 21 are provided at positions of the cleaning liquid reinjection pipeline 30 near the filter water outlet pipe 25. The valve 9, valve 12 and water pump 11 are opened in the process of injecting the cleaning liquid into the filter 15, so that the cleaning liquid is injected into the filter 15 under the driving of the water pump 11. The valve 20 and the water pump 21 are opened in the process of the cleaning liquid being re-injected into the cleaning liquid preparation tank 3, so that the cleaning liquid is re-injected back to the cleaning liquid preparation tank 3 under the action of the water pump 21. The backwash water injection valve 10, valve 12 and water pump 11 are opened after the cleaning liquid is re-injected back to the cleaning liquid injection preparation tank 3. After the backwash water injection valve 10 is opened, backwash fresh water is injected into the filter 15 through the backwashing water injection valve 10 and the valve 12 under the action of the water pump 11 to backwash the filter 15 in order to further flush the dirt off the mesh of the filter 15.

Below further describes an online cleaning method for cleaning a ship ballast water treatment filter using the online cleaning device of the filter. The method comprises at least the following steps:
Step S1: preparing the cleaning liquid. Fresh water is added to the cleaning liquid preparation tank 3 through the fresh water inlet 2 until the stirring blades 7 are submerged. The stirring electric motor 4 is started up. According to the formula of the cleaning liquid, the weighed hydrochloric acid is slowly added to the cleaning liquid preparation tank 3 through the drug adding opening 6. After being mixed evenly, fresh water is added to the cleaning liquid preparation tank 3 through the fresh water inlet 2 to the preset volume, followed by adding in turns the weighed hexamethylene tetramine, polyacrylic acid, polyaspartic acid, sodium dodecyl sulfonat, and sodium gluconatee which dissolve fully and mix evenly.
Step S2: turning on the filter drain valve 18 and draining the filter 15 as empty as possible.
Step S3: turning off the filter inlet valve 13, filter outlet valve 22 and the filter drain valve 18. Opening the valves 9 and 12 in the cleaning liquid injection valve pipeline 29 and turning on the water pump 11, so that the cleaning liquid is injected into the filter 15 through the cleaning liquid injection pipeline 29. When the filter 15 is full, the water pump 11 is turned off and the valve 9 is closed.
Step S4: soaking for 5-10 minutes so that a full reaction happens between the cleaning liquid and the dirt inside the filter 15.
Step S5: opening the valve 20 in the cleaning fluid reinjection pipeline 30 and starting the water pump 21 so that the cleaning liquid in the filter 15 flows back into the cleaning liquid preparation tank 3 through the cleaning liquid reinjection pipeline 30 so as to be reused.
Step S6: turning on the backwash water injection valve 10 and the water pump 11 to allow backwash fresh water to be injected into the filter 15 through the backwash water injection valve 10 and valve 12 and backwashing for 1-2 minutes.
Step S7: if the filter 15 is blocked seriously, repeating steps S2-S5 to enhance cleaning effect.

In summary, the present invention has at least the following beneficial effects:
(1) the formula of the cleaning liquid adopted by the present invention being simple and easy to be prepared.
(2) through adding the filter cleaning pipeline and the cleaning liquid preparation tank in existing ballast water main pipeline, online cleaning with high efficiency, low cost and good effect being realized without the need for disassembling the filter.
(3) the cleaning process of the present invention having little damage to the filter, and having no damage and corrosion to the coating of the filter mesh and the filter case.
(4) the cleaning method of the present invention being simple and easy to implement.

Specific embodiments are shown below to verify the beneficial effects of the present invention.

### Embodiment 1:

In the prepared cleaning liquid, the molar concentration of hydrochloric acid is 6.0mol/L, the mass-to-volume ratio of the hexamethylene tetramine is 2.5g/L, the mass-to-volume ratio of polyacrylic acid is 16.0g/L, the mass-to-volume ratio of the polyaspartic acid is 8.5g/L, the mass-to-volume ratio of sodium dodecyl sulfate is 0.8g/L, and the mass-to-volume ratio of sodium gluconate is 6.5g/L. Specifically, when preparing the cleaning liquid, fresh water is added to the cleaning liquid preparation tank 3 through the fresh water inlet 2 until the stirring blades 7 are submerged. The volume of the water is about 100L. The stirring electric motor 4 is started. Through the drug adding opening 6, the weighed HCl (molar concentration=12mol/L) 125L is slowly and evenly added into the cleaning liquid preparation tank 3. After all the hydrochloric acid has been added, fresh water is slowly added into the cleaning liquid preparation tank 3 through the fresh water inlet 2 to cause the total volume of the liquid to be 250L. After stirring the liquid evenly, 625g hexamethylene tetramine, 4000g polyacrylic acid, 2125g polyaspartic acid, 200g sodium dodecyl sulfate, and 1625g sodium gluconate are added into the cleaning liquid preparation tank 3 in turns and the liquid is stirred to cause the drugs to dissolve fully and be mixed evenly.

Before cleaning the filter 15, the filter drain valve 18 is turned on to drain the filter 15 as empty as possible.

Closing the filter inlet valve 13, the water outlet valve 22 and the filter drain valve 18, opening the valves 9 and 12 of the cleaning liquid injection pipeline 29, and turning on the water pump 11 so that the cleaning liquid is injected into the filter 15 through the cleaning liquid injection pipeline 29. When the filter 15 is full, turning off the water pump 11 and closing the valve 9.

Soaking for 10 minutes.

Opening the valve 20 in the cleaning liquid reinjection pipeline 30 and starting up the water pump 21 so that the cleaning liquid in the filter 15 is re-injected into the cleaning liquid preparation tank 3 through the cleaning liquid reinjection pipeline 30 so as to be reused.

Opening the backwash water injection valve 10 and starting the water pump 11 to cause backwash fresh water to be injected into the filter 15 through the backwashing water injection valve 10 and valve 12 and backwash the filter 15 for one minute.

With this method, a 40um filter of a ship ballast water management system which is used for half year, is cleaned. Before cleaning, the pressure of the inlet and outlet of the filter is 0.8 bar. After cleaning, ongoing a press test, the pressure of the filter water inlet 14 and the filter water outlet 19 is less than 0.1 bar. Regeneration of the filter 15 is good.

The cleaned mesh viewed microscopically is bright and free of corrosion. The surface of the case is well coated without bubbling or breakage.

### Embodiment two:

In the prepared cleaning liquid, the molar concentration of hydrochloric acid is 4.0mol/L, the mass-to-volume ratio of the hexamethylene tetramine is 2.0g/L, the mass-to-volume ratio of polyacrylic acid is 20.0g/L, the mass-to-volume ratio of the polyaspartic acid is 10.0g/L, the mass-to-volume ratio of sodium dodecyl sulfate is 1.0g/L, and the mass-to-volume ratio of sodium gluconate is 5.0g/L. Specifically, when preparing the cleaning liquid, fresh water is added to the cleaning liquid preparation tank 3 through the fresh water inlet 2 until the stirring blades 7 are submerged. The volume of the water is about 150L. The stirring electric motor 4 is started. Through the drug adding opening 6, the weighed HCl (molar concentration=12mol/L) 100L is added into the cleaning liquid preparation tank 3. After all the hydrochloric acid has been added, fresh water is slowly added into the cleaning liquid preparation tank 3 through the fresh water inlet 2 to cause the total volume of the liquid to be 300L. After stirring evenly, 600g hexamethylene tetramine, 6000g polyacrylic acid, 3000g polyaspartic acid, 300g sodium dodecyl sulfate, and 1500g sodium gluconate are added into the cleaning liquid preparation tank 3 in turns and the liquid is stirred to cause the drug to dissolve fully and be mixed evenly.

Before cleaning the filter 15, the filter drain valve 18 is turned on to drain the filter 15 as empty as possible.

Closing the filter inlet valve 13, the water outlet valve 22 and the filter drain valve 18, opening the valves 9 and 12 in the cleaning liquid injection pipeline 29, and turning on the water pump 11 so that the cleaning liquid is injected into the filter 15 through the cleaning liquid injection pipeline 29. When the filter 15 is full, turning off the water pump 11 and closing the valve 9.

Soaking for 5 minutes.

Opening the valve 20 of the cleaning liquid reinjection pipeline 30 and starting up the water pump 21 so that the cleaning liquid in the filter 15 is re-injected into the cleaning liquid preparation tank 3 through the cleaning liquid reinjection pipeline 30 so as to be reused.

Opening the backwash water injection valve 10 and starting the water pump 11 to cause backwash fresh water to be injected into the filter 15 through the backwashing water injection valve 10 and valve 12 and backwash the filter 15 for two minutes.

With this method, a 50um filter of a ship ballast water management system which is used for half year, is cleaned. Before cleaning, the pressure of the inlet and outlet of the filter is 0.7 bar. After cleaning, ongoing a press test, the pressure of the filter water inlet 14 and the filter water outlet 19 is less than 0.1 bar. Regeneration of the filter 15 is good.

### Embodiment three:

In the prepared cleaning liquid, the molar concentration of hydrochloric acid is 5.0mol/L, the mass-to-volume ratio of the hexamethylene tetramine is 1.5g/L, the mass-to-volume ratio of polyacrylic acid is 15.0g/L, the mass-to-volume ratio of the polyaspartic acid is 5.0g/L, the mass-to-volume ratio of sodium dodecyl sulfate is 1.2g/L, and the mass-to-volume ratio of sodium gluconate is 4.0g/L. Specifically, when preparing the cleaning liquid, fresh water is added to the cleaning liquid preparation tank 3 through the fresh water inlet 2 until the stirring blades 7 are submerged. The volume of the water is about 100L. The stirring electric motor 4 is started. Through the drug adding opening 6, the weighed HCl (molar concentration=12mol/L) 125L is added into the cleaning liquid preparation tank 3. After all the hydrochloric acid has been added, fresh water is slowly added into the cleaning liquid preparation tank 3 through the fresh water inlet 2 to cause the total volume of the liquid to be 300L. After stirring evenly, 450g hexamethylene tetramine, 4500g polyacrylic acid, 1500g polyaspartic acid, 360g sodium dodecyl sulfate, and 1200g sodium gluconate are added into the cleaning liquid preparation tank 3 in turns and the liquid is stirred to cause the drug to dissolve fully and be mixed evenly.

Before cleaning the filter 15, the filter drain valve 18 is turned on to drain the filter 15 as empty as possible.

Closing the filter inlet valve 13, the water outlet valve 22 and the filter drain valve 18, opening the valves 9 and 12 of the cleaning liquid injection pipeline 29, and turning on the water pump 11 so that the cleaning liquid is injected into the filter 15 through the cleaning liquid injection pipeline 29. When the filter 15 is full, turning off the water pump 11 and closing the valve 9.

Soaking for 7 minutes.

Opening the valve 20 of the cleaning liquid reinjection pipeline 30 and starting up the water pump 21 so that the cleaning liquid in the filter 15 is re-injected into the cleaning liquid preparation tank 3 through the cleaning liquid reinjection pipeline 30 so as to be reused.

Opening the backwash water injection valve 10 and starting the water pump 11 to cause backwash fresh water to be injected into the filter 15 through the backwashing water injection valve 10 and valve 12 and backwash the filter 15 for one minute.

With this method, a 40um filter of a ship ballast water management system which is used for one year, is cleaned. Before cleaning, the pressure of the inlet and outlet of the filter is 0.8 bar. After cleaning, ongoing a press test, the pressure of the filter water inlet 14 and the filter water outlet 19 is less than 0.1 bar. Regeneration of the filter 15 is good.

The above is just the embodiment of the invention, not any restrictions on the form of the invention, although the invention has been to example above, but not to limit the invention, familiar with any technical personnel in the field, in the technical scheme of the invention can be used when the range these reveal the technical content to make a change or modified to change the equivalent examples, but not out of the technical scheme of the invention, according to any simple modification, equivalent change and modification technology of the essence of the invention for the above examples, are still belongs to the technical scheme of the invention.

### Industrial Applicability

The present invention adds the filter cleaning pipeline and the cleaning liquid preparation tank in existing ballast water main pipeline. Through the filter cleaning pipeline, the cleaning liquid prepared in the cleaning liquid preparation tank is injected into the filter and re-injected back to the cleaning liquid preparation tank after soaking for a predetermined period of time, so as to realize online cleaning the filter without disassembling the filter. The online cleaning has a high cleaning efficiency, low cost and good effect. The cleaning process has little damage to the filter and no damage and corrosion to the coating of the filter mesh and the filter case. The cleaning method is simple and easy to implement. Moreover, the formulation of the cleaning liquid of the present invention is simple and easy to be prepared.

## Claims

1. A cleaning liquid for cleaning a ship ballast water treatment filter, wherein the cleaning liquid comprises hydrochloric acid with a molar concentration of 3.2-6.4mol/L, hexamethylene tetramine with a mass-to-volume ratio of 1.3-4.0g/L, polyacrylic acid with a mass-to-volume ratio of 13.0-33.5g/L, polyaspartic acid with a mass-to-volume ratio of 3.0-13.5g/L, sodium dodecyl sulfate with a mass-to-volume ratio of 0.6-2.0g/L, and sodium gluconate with a mass-to-volume ratio of 3.0-10.0g/L.

2. The cleaning liquid for cleaning a ship ballast water treatment filter of claim 1, wherein in the prepared cleaning liquid, the molar concentration of the hydrochloric acid is 6.0mol/L, the mass-to-volume ratio of the hexamethylene tetramine is 2.5g/L, the mass-to-volume ratio of the polyacrylic acid is 16.0g/L, the mass-to-volume ratio of the polyaspartic acid is 8.5g/L, the mass-to-volume ratio of the sodium dodecyl sulfate is 0.8g/L, and the mass-to-volume ratio of the sodium gluconate is 6.5g/L.

3. The cleaning liquid for cleaning a ship ballast water treatment filter of claim 1, wherein in the prepared cleaning liquid, the molar concentration of the hydrochloric acid is 4.0mol/L, the mass-to-volume ratio of the hexamethylene tetramine is 2.0g/L, the mass-to-volume ratio of the polyacrylic acid is 20.0g/L, the mass-to-volume ratio of the polyaspartic acid is 10.0g/L, the mass-to-volume ratio of the sodium dodecyl sulfate is 1.0g/L, and the mass-to-volume ratio of the sodium gluconate is 5.0g/L.

4. The cleaning liquid for cleaning a ship ballast water treatment filter of claim 1, wherein in the prepared cleaning liquid, the molar concentration of the hydrochloric acid is 5.0mol/L, the mass-to-volume ratio of the hexamethylene tetramine is 1.5g/L, the mass-to-volume ratio of the polyacrylic acid is 15.0g/L, the mass-to-volume ratio of the polyaspartic acid is 5.0g/L, the mass-to-volume ratio of the sodium dodecyl sulfate is 1.2g/L, and the mass-to-volume ratio of the sodium gluconate is 4.0g/L.

## Patentansprüche

1. Reinigungsflüssigkeit zum Reinigen eines Filters zur Behandlung von Schiffsballastwasser, wobei die Reinigungsflüssigkeit Salzsäure mit einer molaren Konzentration von 3,2-6,4 mol/l, Hexamethylenetramin mit einem Masse-zu-Volumen-Verhältnis von 1,3-4,0 g/l, Polyacrylsäure mit einem Masse-zu-Volumen-Verhältnis von 13,0-33,5 g/l, Polyasparaginsäure mit einem Masse-zu-Volumen-Verhältnis von 3,0-13,5 g/l, Natriumdodecylsulfat mit einem Masse-zu-Volumen-Verhältnis von 0,6-2,0 g/l und Natriumgluconat mit einem Masse-zu-Volumen-Verhältnis von 3,0-10,0 g/l umfasst.

2. Reinigungsflüssigkeit zum Reinigen eines Filters zur Behandlung von Schiffsballastwasser nach Anspruch 1, wobei in der hergestellten Reinigungsflüssigkeit die molare Konzentration der Salzsäure 6,0 mol/l beträgt, das Masse-zu-Volumen-Verhältnis des Hexamethylentetramins 2,5 g/l beträgt, das Masse-zu-Volumen-Verhältnis der Polyacrylsäure 16,0 g/l beträgt, das Masse-zu-Volumen-Verhältnis der Polyasparaginsäure 8,5 g/l beträgt, das Masse-zu-Volumen-Verhältnis des Natriumdodecylsulfats 0,8 g/l beträgt und das Masse-zu-Volumen-Verhältnis des Natriumgluconats 6,5 g/l beträgt.

3. Reinigungsflüssigkeit zum Reinigen eines Filters zur Behandlung von Schiffsballastwasser nach Anspruch 1, wobei in der hergestellten Reinigungsflüssigkeit die molare Konzentration der Salzsäure 4,0 mol/l beträgt, das Masse-zu-Volumen-Verhältnis des Hexamethylentetramins 2,0 g/l beträgt, das Masse-zu-Volumen-Verhältnis der Polyacrylsäure 20,0 g/l beträgt, das Masse-zu-Volumen-Verhältnis der Polyasparaginsäure 10,0 g/l beträgt, das Masse-zu-Volumen-Verhältnis des Natriumdodecylsulfats 1,0 g/l beträgt und das Masse-zu-Volumen-Verhältnis des Natriumgluconats 5,0 g/l beträgt.

4. Reinigungsflüssigkeit zum Reinigen eines Filters zur Behandlung von Schiffsballastwasser nach Anspruch 1, wobei in der hergestellten Reinigungsflüssigkeit die molare Konzentration der Salzsäure 5,0 mol/l beträgt, das Masse-zu-Volumen-Verhältnis des Hexamethylentetramins 1,5 g/l beträgt, das Masse-zu-Volumen-Verhältnis der Polyacrylsäure 15,0 g/l beträgt, das Masse-zu-Volumen-Verhältnis der Polyasparaginsäure 5,0 g/l beträgt, das Masse-zu-Volumen-Verhältnis des Natriumdodecylsulfats 1,2 g/l beträgt und das Masse-zu-Volumen-Verhältnis des Natriumgluconats 4,0 g/l beträgt.

## Revendications

1. Liquide de nettoyage pour nettoyer un filtre de traitement d'eau de ballast de navire, dans lequel le liquide de nettoyage comprend de l'acide chlorhydrique avec une concentration molaire de 3,2 à 6,4 mol/l, de l'hexaméthylène tétramine avec un rapport masse/volume de 1,3 à 4,0 g/l, du poly(acide acrylique) avec un rapport masse/volume de 13,0-33,5 g/l, du poly(acide aspartique) avec un rapport masse/volume de 3,0 à 13,5 g/l, du dodécylsulfate de sodium avec un rapport masse/volume de 0,6 à 2,0 g/l et du gluconate de sodium avec un rapport masse/volume de 3,0 à 10,0 g/l.

2. Liquide de nettoyage pour nettoyer un filtre de traitement d'eau de ballast de navire selon la revendication 1, dans lequel, dans le liquide de nettoyage préparé, la concentration molaire de l'acide chlorhydrique est de 6,0 mol/l, le rapport masse/volume de l'hexaméthylène tétramine est de 2,5 g/l, le rapport masse/volume du poly(acide acrylique) est de 16,0 g/l, le rapport masse/volume du poly(acide aspartique) est de 8,5 g/l, le rapport masse/volume du dodécylsulfate de sodium est de 0,8 g/l et le rapport masse/volume du gluconate de sodium est de 6,5 g/l.

3. Liquide de nettoyage pour nettoyer un filtre de traitement d'eau de ballast de navire selon la revendication 1, dans lequel, dans le liquide de nettoyage préparé, la concentration molaire de l'acide chlorhydrique est de 4,0 mol/l, le rapport masse/volume de l'hexaméthylène tétramine est de 2,0 g/l, le rapport masse/volume du poly(acide acrylique) est de 20,0 g/l, le rapport masse/volume du poly(acide aspartique) est de 10,0 g/l, le rapport masse/volume du dodécylsulfate de sodium est de 1,0 g/l et le rapport masse/volume du gluconate de sodium est de 5,0 g/l.

4. Liquide de nettoyage pour nettoyer un filtre de traitement d'eau de ballast de navire selon la revendication 1, dans lequel, dans le liquide de nettoyage préparé, la concentration molaire de l'acide chlorhydrique est de 5,0 mol/l, le rapport masse/volume de l'hexaméthylène tétramine est de 1,5 g/l, le rapport masse/volume du poly(acide acrylique) est de 15,0 g/l, le rapport masse/volume du poly(acide aspartique) est de 5,0 g/l, le rapport masse/volume du dodécylsulfate de sodium est de 1,2 g/l et le rapport masse/volume du gluconate de sodium est de 4,0 g/l.
